Europäisches Patentamt

European Patent Office

Office européen des brevets

(19)

(11) Numéro de publication : **0 007 254**
**B1**

# (12) FASCICULE DE BREVET EUROPÉEN

(45) Date de publication du fascicule du brevet :
16.02.83

(21) Numéro de dépôt : **79400303.8**

(22) Date de dépôt : **14.05.79**

(51) Int. Cl.³ : **B 08 B 9/06**, B 08 B 9/04,
F 16 K 11/04

(54) **Dispositif de rinçage des canalisations et installations de tirage de bière et autre liquide sous pression.**

(30) Priorité : **30.05.78 FR 7816161**

(43) Date de publication de la demande :
**23.01.80 Bulletin 80/02**

(45) Mention de la délivrance du brevet :
**16.02.83 Bulletin 83/07**

(84) Etats contractants désignés :
**AT BE CH DE FR GB IT LU NL SE**

(56) Documents cités :
**BE A 858 896**
**DE C 664 863**
**US A 3 930 515**

(73) Titulaire : **Gruffy, Georges**
**I rue de Férolles**
**F-77330 Ozoir La Ferrière (FR)**

(72) Inventeur : **Gruffy, Georges**
**I rue de Férolles**
**F-77330 Ozoir La Ferrière (FR)**

(74) Mandataire : **Poportz, Germain et al**
**195 rue de Fontenay**
**F-94300 Vincennes (FR)**

Jouve, 18, rue St-Denis, 75001 Paris, France

## Dispositif de rinçage des canalisations et installations de tirage de bière et autre liquide sous pression

L'invention concerne un dispositif destiné au rinçage des canalisations et installations de tirage de bière à la pression (ou de tout autre liquide) ; un corps principal en métal en T de forme tubulaire à l'intérieur duquel se trouve une bille en métal (elle sera utilement en acier inoxydable), dont le diamètre est inférieur à la section intérieure du tube dans lequel elle se déplace, et dont le déplacement est limité par un ressort à l'extrémité de l'une des branches du T, assurant la fermeture de cette branche ; le ressort est taré de façon à compenser la différence de pression entre celle de la bière à tirer et celle de l'eau de ville (la pression de la bière étant obtenue selon le principe connu de l'adjonction d'anhydride carbonique) ; un clapet en caoutchouc (ou en matière synthétique) se trouve à l'extrémité de l'autre barre du T assurant la fermeture de l'autre branche ; l'ouverture vers le pied du T reste libre.

Ce dispositif est fixé par un raccord fileté situé à la branche contenant la bille, sur le plongeur d'un fût de bière (ou de tout autre liquide sous pression). L'ouverture de l'eau permet le rinçage des canalisations, sans risque d'introduction dans le liquide sous pression, la bille et le ressort d'une part et la membrane d'autre part faisant chacun en ce qui les concerne office de clapet anti-retour. De plus en introduisant une boule en caoutchouc, ou en matière souple d'un diamètre très proche de celui des canalisations, par un « raccord rapide » situé immédiatement après le robinet d'arrivée d'eau, on obtient un nettoyage parfait, la boule ressortant en fin de circuit par le robinet de tirage.

Ce dispositif aura son utilisation principalement dans les débits de boissons : pour procéder au nettoyage des canalisations, avec les installations existantes, il est nécessaire d'avoir recours à une main d'œuvre spécialisée et coûteuse ; de plus l'intervention nécessite la mise hors circuit de l'installation.

On connait déjà des dispositifs se rapprochant de l'invention décrite au préambule de la revendication (Brevet Français n° 2 211 861) — (Brevet U.S.A. n° 3 389 716) — (Brevet belge BE-A-858 896) : ceux-ci ont l'inconvénient de nécessiter une modification de l'installation existante et de ne pas s'adapter indifféremment sur tous les types de plongeur. Le fonctionnement n'est pas entièrement automatique puisqu'il nécessite soit la pose d'une vanne à commande électrique, soit une intervention manuelle directement sur l'appareil et indépendante de l'ouverture de l'eau. Ainsi selon le Brevet BE-A-858 896 il est nécessaire d'avoir recours à deux électro-vannes ainsi qu'à une sonde montée dans la conduite.

Cependant le principal inconvénient est que les passages du dispositif sont de diamètre différent, ce qui entraîne des points de fermentation laquelle est particulièrement nocive en ce qui concerne la bière et en général tous les liquides alimentaires, le nettoyage ne pouvant se faire que de façon imparfaite puisqu'il laisse des points où le nettoyage n'est pas effectué. De plus dans aucun des systèmes existants et connus à ce jour, et du fait des différences de diamètre à l'intérieur du dispositif, il est impossible de faire passer une boule éponge, laquelle a pour avantage de parfaire le travail de nettoyage par l'eau.

La présente invention a pour but d'apporter un remède à ces difficultés.

L'invention telle qu'elle est caractérisée dans les revendications, résout le problème consistant à créer un dispositif permettant le nettoyage des canalisations des installations de tirage de bière sous pression (ou de tout autre liquide), simple, s'adaptant instantannément par simple vissage, à tous les types d'installation et de fûts ; ce dispositif est en outre d'un fonctionnement très simple puisqu'il suffit d'ouvrir le robinet d'eau de ville pour la mise en fonction du dispositif ; de plus il permet de réaliser un nettoyage parfait de tout le circuit, sans points de fermentation qui nuisent à l'hygiène et à la qualité de la bière.

Les avantages obtenus grâce à cette invention consistent essentiellement en ce que le nettoyage est réalisé automatiquement, sans modification de l'installation existante, et en assurant une hygiène totale grâce au passage d'une boule de caoutchouc poussée par la pression de l'eau, le passage de cette boule n'est possible que grâce à un diamètre constant de toutes les parties du dispositif ; de ce fait aucun point de fermentation n'est à craindre, ce qui n'était pas le cas avec les dispositifs connus à ce jour, possédant des parties de passage du liquide nettoyant, de diamètre différent.

Dans ce qui suit, l'invention est exposée plus en détail à l'aide de dessins représentant seulement un mode d'exécution.

La figure 1 représente en coupe le dispositif hors service. La figure 2 représente en plan la membrane en caoutchouc. La figure 3 représente en coupe le dispositif schématisé en fonctionnement pendant le nettoyage. La figure 4 représente en coupe le dispositif schématisé en fonctionnement pendant le tirage. La figure 5 représente le dispositif relié à l'installation.

La figure 2 représente la membrane en caoutchouc (5) composée d'une pastille ronde mobile reliée à un anneau circulaire, lequel anneau sert de joint entre le corps 1 de l'appareil et le raccord 2.

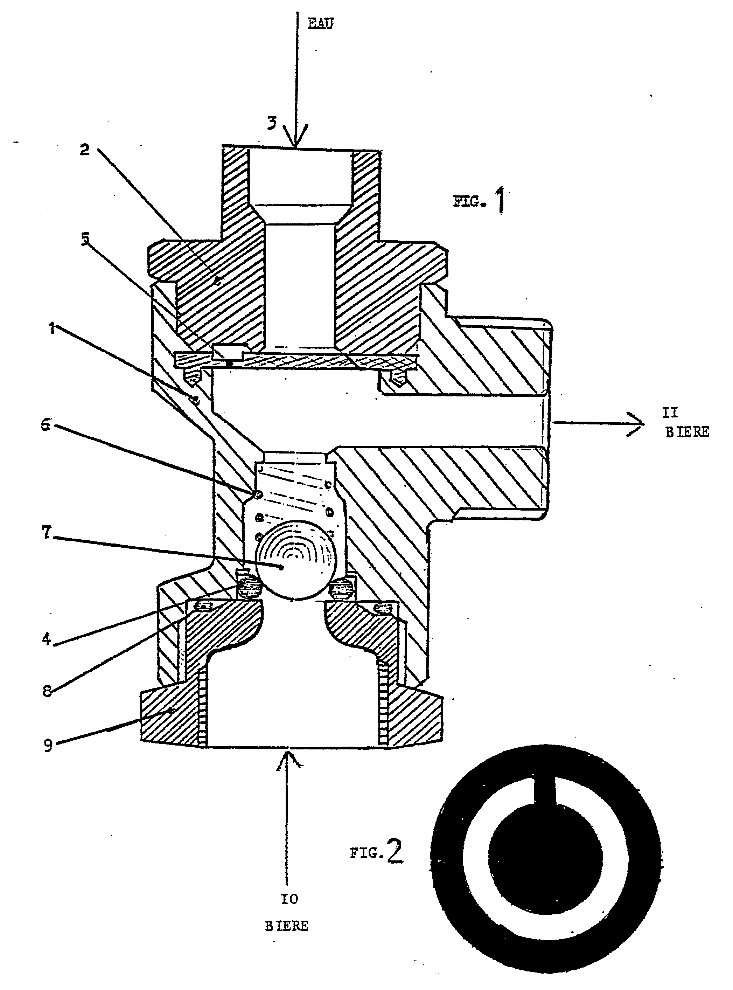

La figure 1 représente donc le corps usiné 1 dans lequel va se déplacer la bille 7 comprimée par un ressort 6 (dispositif connu) et dans lequel également la membrane en caoutchouc 5 est placée.

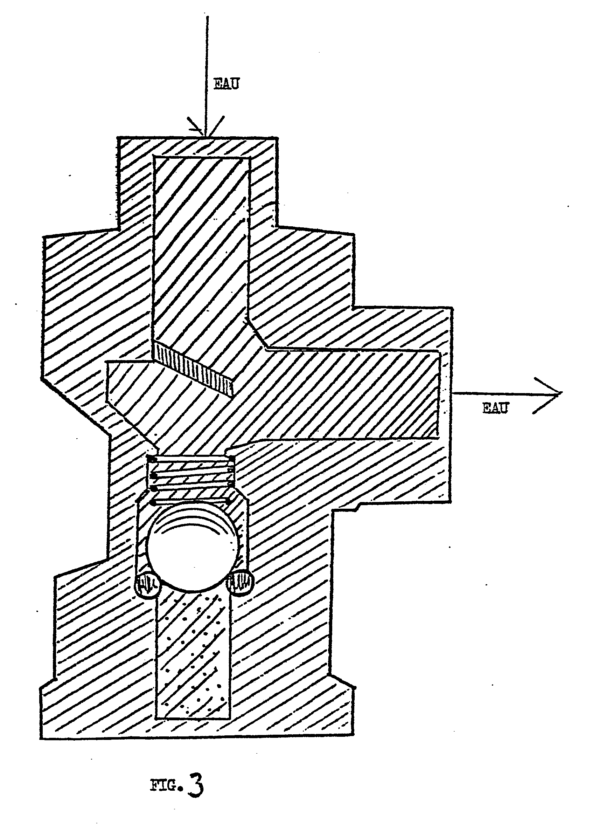

Les deux extrémités de la barre du T sont terminées par une partie filetée femelle, et le pieds du T par une partie filetée mâle. A l'extrémité de l'une des barres du T vient se visser un raccord double mâle fileté 2 sur lequel viendra se fixer l'arrivée d'eau de ville sous pression en 3. A l'extrémité de l'autre barre du T se visse un raccord mâle 9. L'étanchéité est assurée par un joint torique 8, fixé dans le raccord 9. Le raccord 9 à sa partie extérieure est en forme d'écrou six pans ; la partie intérieure de l'écrou six pans est filetée pour être raccordée par vissage sur le plongeur du fût de bière. Dans le corps 1 de l'appareil et dans la branche où vient se visser le raccord 9, se trouve une bille en acier 7 qui repose sur un joint torique 4 ; la bille 7 est maintenue à l'intérieur de l'appareil par un ressort 6. Le présent dispositif s'adapte indifféremment sur tous les types de plongeur. Lorsque la bière sous pression est libérée, la pression repousse la bille 7 comprimant le ressort 6 (dispositif connu), et permettant à la bière de passer tout autour de la bille, en se dirigeant vers le robinet de tirage. Lorsque la bière circule tout en entrant par l'arrivée 10 et ressortant par le pied du T II la pression plaque une membrane de caoutchouc 5 contre le raccord fileté 2 vissé à l'autre extrémité de la barre du T, lequel raccord est relié à l'arrivée d'eau 3. La membrane en caoutchouc 5, représentée figure 2 en plan est composée d'une pastille ronde mobile reliée à un anneau circulaire, lequel anneau sert de joint entre le corps 1 de l'appareil et le raccord 2.

Lorsque le tirage de bière est effectué la pastille de la membrane 5 est plaquée contre le raccord 2 évitant tout risque de mélange entre le liquide alimentaire et le liquide de nettoyage.

Lorsque l'eau est ouverte sa pression repousse la membrane 5 qui n'offre pas de résistance, et permet alors l'opération de nettoyage de la totalité des canalisations ainsi que de l'appareil lui-même ; en s'abaissant sous la pression de l'eau, la partie mobile de la membrane forme alors une glissière inclinée vers la sortie libre, ce qui facilitera le passage de la boule en caoutchouc à l'intérieur du circuit, la pression de l'eau repousse alors la bille 7 contre le joint torique 4, réalisant alors l'étanchéité entre le circuit des canalisations et le fût de bière. En conséquence le dispositif étant fixé sur le fût de bière et relié à la fois à l'eau de ville et à la colonne de tirage de bière, le fonctionnement est d'une grande simplicité et entièrement automatique. De plus le ressort 6 est taré de façon à ce que la différence de pression entre la bière et l'eau de ville soit suffisante pour permettre à volonté, le passage, soit de la bière, soit de l'eau, par la simple ouverture ou fermeture de l'un ou de l'autre des robinets.

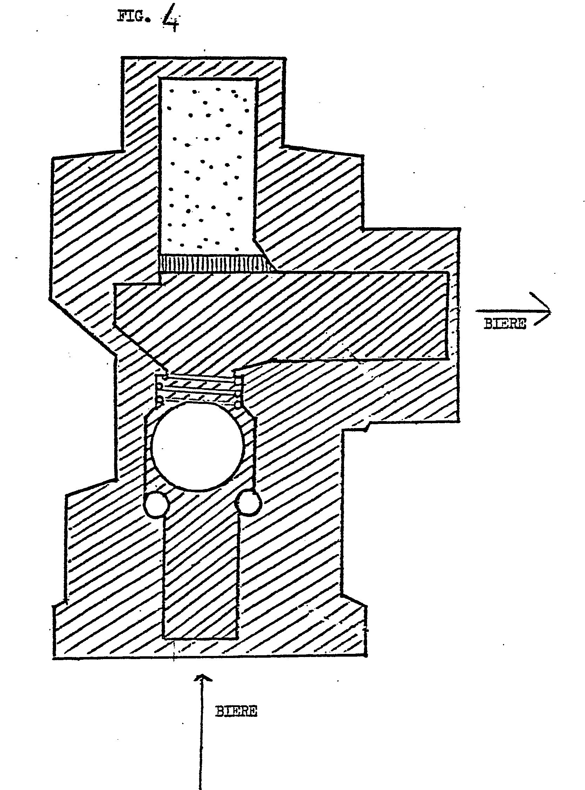

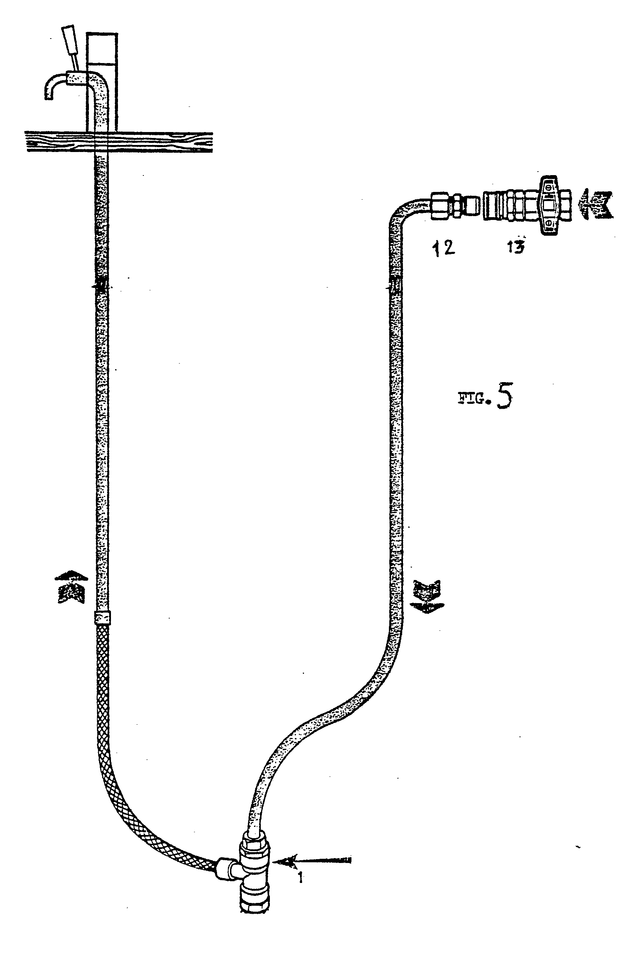

Le fonctionnement de la présente invention sera davantage explicité en se reportant à la figure 5, laquelle représente le dispositif relié à l'installation ; un raccord rapide 12 installé entre le robinet d'eau 13 et le dispositif, permet l'introduction de la boule de caoutchouc, qui par son passage dans l'ensemble du circuit des canalisations, renforcera l'effet nettoyant du liquide de rinçage.

Les avantages obtenus grâce à cette invention consistent essentiellement en ceci que le fonctionnement est entièrement automatique par simple ouverture d'un robinet ; de plus grâce à une section constante il est possible de faire passer une boule de caoutchouc tant de l'appareil objet de la présente invention, que dans les canalisations, ce qui a l'avantage supplémentaire de ne pas laisser subsister de points de fermentation, laquelle fermentation altère la qualité de la bière.

De plus il n'est pas possible que le liquide alimentaire et le liquide de rinçage puissent se mélanger, la bille 7 et le ressort 6 d'une part, et la membrane 5 d'autre part faisant chacun en ce qui les concerne office de soupape anti-retour. De plus le dispositif de la présente invention étant entièrement démontable, il est possible de changer les diverses pièces et joints qui sont à l'intérieur, ce qui facilite grandement l'entretien et le nettoyage de l'appareil lui-même.

## Revendications

1. Dispositif destiné au rinçage des canalisations de tirage de bière à la pression comportant un corps (1) usiné en métal en forme de T, de section intérieure tubulaire, la première branche du T (10), reliée au plongeur du fût de bière, est pourvue d'un clapet anti-retour à bille (7), la deuxième branche du T (3), reliée à une arrivée d'eau, est munie d'un deuxième clapet anti-retour (5), le pied du T (II) restant libre et relié à la canalisation de tirage de bière, caractérisé en ce que la bille (7) est tarée par un ressort (6) et que le deuxième clapet anti-retour (5) est en caoutchouc et comporte une partie annulaire formant joint d'étanchéité entre le corps (I) et un raccord (2), et une partie centrale concentrique formant clapet anti-retour, de façon à ce que l'opération de rinçage puisse être commandée par simple ouverture de l'arrivée d'eau, sans intervention sur le dispositif.

2. Dispositif selon la revendication 1 caractérisé en ce que la partie centrale concentrique du clapet anti-retour en caoutchouc permet par sa mobilité le passage d'une boule en caoutchouc lorsque le dispositif est en position de rinçage.

3. Dispositif selon les revendications 1 à 3 caractérisé par le fait qu'une boule de caoutchouc introduite au moyen d'un raccord rapide (12) placée après le robinet d'eau (13), parfait le nettoyage en parcourant tout le circuit de canalisations y compris le dispositif lui-même.

4. Dispositif selon les revendications 1 à 4 caractérisé par le fait que les interventions sur l'appareil sont facilitées grâce aux deux raccords fixés aux extrémités, donnant accès aux pièces internes du dispositif.

5. Dispositif selon les revendications 1 à 5 caractérisé par le fait que le liquide de nettoyage peut être utilement de l'eau de ville sous pression.

## Claims

1. A device for rinsing the pipes used to draw beer from pressurized kegs, consisting of a machine metal body, item 1, in the form of a hollow T. One end of the T cross-branch, item 10, is connected to the keg outlet and contains a non-return ball-valve, item 7. The other end of the T cross-branch, item 3, is connected to a water supply and contains a second non-return valve, item 5. The leg of the T, item 11, remains open and is connected to the beer serving tap pipe. The invention is characterized by the fact that the ball, item 7, opening pressure is controlled by a spring, item 6, and that the second non-return valve, item 5, is in rubber and includes an annulus which forms the seal between the body, item 1, and a union, item 2, and a central section which forms the non-return valve proper ; this combination allows the rinsing operation to be controlled simply by opening the water tap ; no other operation is required on the device itself.

2. Device as described by claim 1, characterized by the fact that the central, concentric section of the rubber non-return valve, by virtue of its freedom to move, allows a rubber ball to be passed through the pipes when the system is used for rinsing.

3. Device as described for claims 1 and 2, characterized by the fact that a rubber ball, introduced via a quick-release coupling, item 12, mounted downstream of the water tap, item 13, can be driven through the circuit, including the device itself, to improve cleaning.

4. Device as described for claims 1 to 3 characterized by the fact that work on the device is facilitated by 2 unions mounted at the ends of the T, giving access to internal components.

5. Device as described for claims 1 to 5, characterized by the fact that the cleaning fluid used can be town water under pressure.

### Ansprüche

1. Einrichtung zum Spülen von Druckbierzapfleitungswegen aus einem T-förmig bearbeiteten Körper (1) aus Metall mit rohrförmigem Innenquerschnitt, wobei ein Schenkel von T-Stück (10) mit dem Taucher des Bierfasses verbunden und mit einer Rückschlagklappe mit Kugel (7) versehen ist, der zweite Schenkel (3) des T-Stückes mit einer Wasserzuführung verbunden und mit einer zweiten Rückschlagklappe (5) versehen ist und der T-Stückfuss (11) frei bleibt und mit der Bierzapfleitung verbunden ist, dadurch gekennzeichnet, dass die Kugel (7) durch eine Feder (6) druckgeeicht ist und die zweite Rückschlagklappe (5) aus Gummi besteht und einen ringförmigen, eine Dichtung zwischen Körper (1) und eine Kupplung (2) bildenden Teil und einen mittleren, konzentrischen und eine Rückschlagklappe bildenden Teil umfasst derart, dass der Spülvorgang durch einfaches Aufdrehen der Wasserzuführung ohne Eingriff in die Einrichtung gesteuert werden kann.

2. Einrichtung nach Anspruch 1, dadurch gekennzeichnet, dass der mittlere, konzentrische Teil der Rückschlagklappe aus Gummi aufgrund seiner Beweglichkeit den Durchlauf einer Gummikugel dann zulässt, wenn die Einrichtung in Spülstellung geschaltet wurde.

3. Einrichtung nach Anspruch 1 bis 3, dadurch gekennzeichnet, dass eine mittels einer Schnellkupplung (12), die dem Wasserhahn (13) nachgeschaltet ist, eingeführte Gummikugel die Reinigung durch Durchlaufen des gesamten Leitungswegsystemes inklusive der eigentlichen Einrichtung selbst vollendet.

4. Einrichtung nach Anspruch 1 bis 4, dadurch gekennzeichnet, dass durch beide an den Einrichtungsenden befestigten, Zugang zu den innenliegenden Teilen der Einrichtung gewährenden Kupplungen Eingriffsmassnahmen an der Einrichtung erleichtert werden.

5. Einrichtung nach Anspruch 1 bis 5, dadurch gekennzeichnet, dass die Reinigungsflüssigkeit zweckmässig unter Druck stehendes Wasser as dem öffentlichen Wasserversorgungsnetz sein kann.

EAU

3

2

5

1

6

7

4

8

9

FIG. 1

II
BIERE

IO
BIERE

FIG. 2

EAU

EAU

FIG. 3

FIG. 4

BIERE

BIERE

FIG. 5

12    13

1